# EUROPÄISCHE PATENTANMELDUNG

(11) **EP 2 520 743 A1**
(43) Veröffentlichungstag der Anmeldung: **07.11.2012**
(21) Anmeldenummer: 11165128.7
(22) Anmeldetag: 06.05.2011
(51) Int. Cl.: E04H 17/16, E04H 17/14

(54) **Gartenzaunelement sowie damit gebildeter Gartenzaun**

(71) Anmelder: ttp GmbH, 26871 Papenburg (DE)
(72) Erfinder: Bahnes, Hermann, 26871 Papenburg (DE)
(74) Vertreter: Strobel, Wolfgang

(57) **Zusammenfassung**

Gartenzaunelement (1) zur Bildung eines Gartenzauns bestehend aus einer Mehrzahl unterschiedlicher Zaunelemente, mit einem Grundkörper (2), der aus einem Kunststoffmaterial, insbesondere PVC, mittels Extrusion gebildet ist, wobei der Grundkörper (2) an den Sichtflächen mit einer mittels Coextrusion aufgebrachten dünnen WPC-Schicht (3) beschichtet ist.

## Beschreibung

Die vorliegende Erfindung betrifft ein Gartenzaunelement, das zur Bildung eines Gartenzauns, der aus einer Mehrzahl von Gartenzaunelemente bestehen kann, unterschiedliche Formen oder Gestaltungen aufweisen kann, wobei es einen Grundkörper aufweist, der aus einem Kunststoffmaterial, insbesondere PVC, mittels Extrusion gebildet ist.

Weiterhin betrifft die vorliegende Erfindung einen Gartenzaun, der aus einer Mehrzahl von erfindungsgemäßen Gartenzaunelementen gebildet ist, die auch unterschiedliche Formen aufweisen können.

Gartenzäune bestehen üblicherweise aus einer Mehrzahl von Gartenzaunelementen, wobei herkömmlicherweise als Werkstoff vorwiegend Holz Verwendung findet. Der große Nachteil des Werkstoffes Holz ist, dass er nicht witterungsbeständig ist und mit der Zeit verfault bzw. sich zersetzt, was ein entsprechendes Ersetzen der beschädigten Gartenzaunelemente notwendig macht.

Hilfsmaßnahmen zur Verlängerung der Lebensdauer von Holzwerkstoffen sind unter anderem das Imprägnieren mit Holzschutzmitteln, die in der Regel umweltschädlich sind und zudem eine wiederholte Anwendung notwendig machen, wodurch solche Gartenzäune im Unterhalt einen entsprechenden Aufwand erfordern.

Als Alternative zum Werkstoff Holz wurden Gartenzäune aus Kunststoff, insbesondere PVC vorgeschlagen, wobei die einzelnen Gartenzaunelemente mittels Extrusion einfach und bequem hergestellt werden können. Diese witterungsbeständigen Gartenzäune haben jedoch den großen optischen Nachteil, dass man ihnen sofort ansieht, dass sie aus Kunststoff bestehen, was dem ästhetischen Empfinden eines Gartenzauns vielfach widerspricht.

Der vorliegenden Erfindung liegt deshalb die Aufgabe zugrunde, ein Gartenzaunelement vorzuschlagen, bei dem einerseits der Vorteil der Witterungsbeständigkeit besteht und andererseits sowohl der optische als auch der haptische Eindruck eines Holzwerkstoffs verwirklicht wird.

Diese Aufgabe wird durch die Merkmale des Anspruchs 1 gelöst.

Gemäß der vorliegenden Erfindung ist der Grundkörper an den Sichtflächen mit einer mittels Coextrusion aufgebrachten dünnen WPC-Schicht beschichtet. Der Werkstoff WPC (Wood-Plastic Composite), der bereits weit verbreitet ist, ist aus einem Gemisch von Holz und Kunststoff, insbesondere PVC in einem Mischungsverhältnis von Holz zu Kunststoff von 60/40 bis 40/60 gebildet. Aufgrund des Holzfaseranteils entsteht bei Auftragen einer dünnen WPC-Schicht eine unregelmäßige Oberfläche, beispielsweise im Gegensatz zum reinen extrudierten Kunststoff, so dass der optische Eindruck eines Gartenzaunelements aus Holzwerkstoff verwirklicht wird.

Vorzugsweise weist die WPC-Schicht eine Dicke von 0,3 bis 1 mm und bevorzugt von 0,4 bis 0,5 mm auf.

Vorteilhafterweise wird durch die Unregelmäßigkeit der Oberflächenschicht des Gartenzaunelements auch der haptische Eindruck einer unregelmäßigen Holzoberfläche erzeugt.

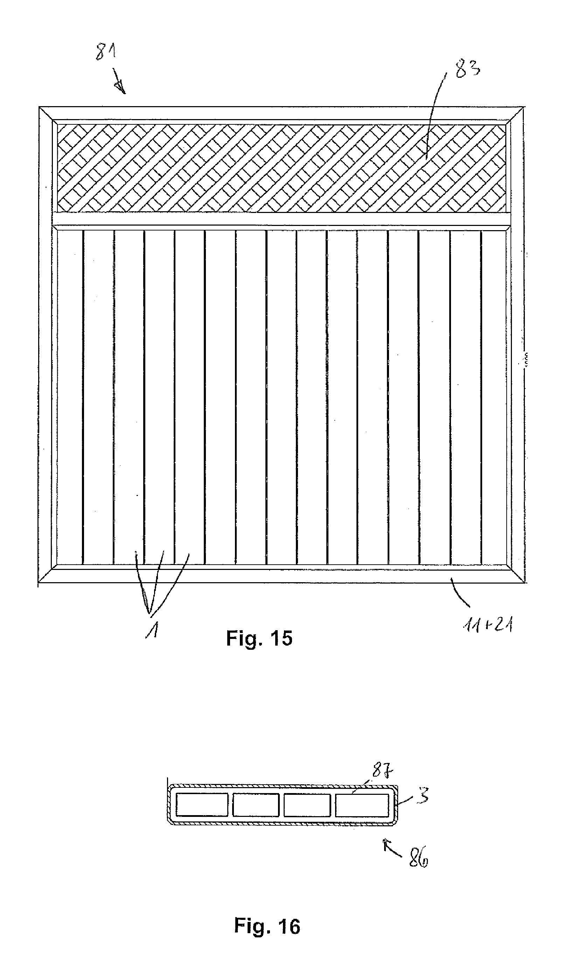

Mit dem Begriff "Gartenzaunelement" werden alle Elemente, aus denen ein Gartenzaun gebildet sein kann eingeschlossen: Paneele, Rahmen, Pfosten, Zaunlatten, Rahmenprofile, Rankzaunflechtelemente (Figuren 15 und 16), Abschlussleisten, sog. "Glasleisten", Lisenen, etc.

Die vorliegende Erfindung umfasst auch einen Gartenzaun, der aus einer Auswahl der oben genannten Elemente, die ihrerseits jeweils mit einer WPC-Schicht beschichtet sind, gebildet ist.

Weitere Einzelheiten, Merkmale und Vorteile der vorliegenden Erfindung ergeben sich aus der nachfolgenden Beschreibung unter Bezugnahme auf die Zeichnungen. Darin zeigt:
- Fig. 1: eine Ansicht auf die Stirnseite eines als Paneele ausgebildeten Gartenzaunelements;
- Fig. 2: in vergrößertem Maßstab die Einzelheit "X" von Figur 1;
- Fig. 3: in vergrößertem Maßstab die Einzelheit "Y" von Figur 1;

- Fig. 4: in Stirnansicht ein Rahmenprofil, das mit einer sogenannten "Glasleiste", einer Abschlussleiste verbunden ist, zur Aufnahme des Verbindungsabschnitts einer Paneele von Figur 1;
- Fig. 5: die Abschlussleiste von Figur 4, in einer gegenüber Figur 4 auf den Kopf gestellten Darstellung;
- Fig. 6: die Einzelheit "X" von Figur 5;
- Fig. 7: ein aus Paneelen und seitlichen Rahmen zusammengesetztes Zaunflächenelement;
- Fig. 8: eine Schnittansicht entlang der Linie A-A von Figur 7;
- Fig. 9 und Fig. 10: je ein Rahmenteilprofil in Stirnansicht;
- Fig. 11: ein Rahmenprofil, zusammengesetzt aus den Rahmenteilprofilen von Figur 9 und Figur 10;
- Fig. 12: eine Zaunlatte in Stirnansicht;
- Fig. 13: ein als Pfosten ausgebildetes erfindungsgemäßen Gartenzaunelement;
- Fig. 14: eine Stirnansicht eines Profilelements zum Füllen einer Schwalbenschwanznut des Pfostens von Figur 13;
- Fig. 15: ein Gartenzaunelement ähnlich zu jenem von Figur 7, jedoch mit einem oberen Abschnitt mit Rankzaungeflecht; und
- Fig. 16: ein Rankzaunflechtprofil zum Einsatz in einem Gartenzaunelement nach Figur 15.

In den Figuren sind gleiche Elemente mit den gleichen Bezugsziffern bezeichnet.

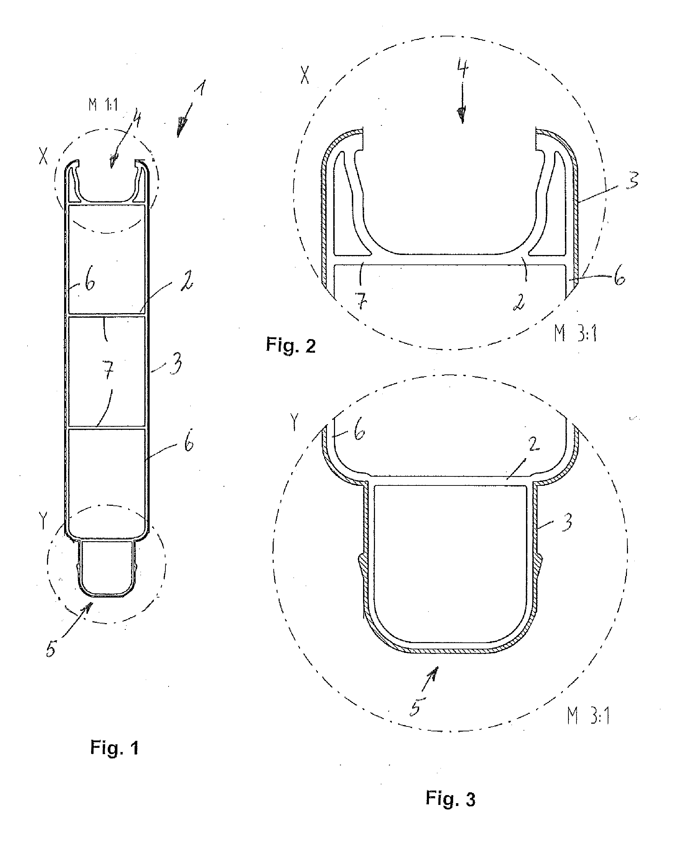

In Figur 1 ist ein erfindungsgemäßes Gartenzaunelement 1 in Stirnansicht dargestellt, das die Form eines Paneels aufweist. Ein im Wesentlichen rechteckförmiger Grundkörper 2 aus Kunststoff, insbesondere aus PVC weist Seitenwände 6 und Querstege 7 auf. Ansonsten ist der Grundkörper hohl.

Wie aus Figur 1 in Zusammenschau mit den Figuren 2 und 3 ersichtlich, weist ein Endabschnitt des Gartenzaunelements 1 einen hohlförmigen Aufnahmeabschnitt 4 und am entgegen gesetzten Ende des Grundkörpers einen vorspringenden Verbindungsabschnitt 5 auf. Beim Zusammensetzen der Paneele 1 wird der Verbindungsabschnitt 5 in den Aufnahmeabschnitt 4 eingesetzt und dort verankert. Zur Bildung einer größeren Gartenzaunfläche können somit eine beliebige Anzahl von Paneelen 1 miteinander verbunden werden.

Erfindungsgemäß weist das Gartenzaunelement an den Sichtflächen eine mittels Coextrusion aufgebrachte dünne WPC-Schicht 3 auf. Aufgrund der in der WPC-Schicht vorhandenen Holzfasern ergibt sich eine raue und nicht gleichmäßige Oberfläche, die bei entsprechender farblicher Ausgestaltung, beispielsweise der Kunststoffkomponente der WPC-Schicht 3 sowohl einen optischen als auch einen haptischen holzähnlichen Eindruck erzeugt.

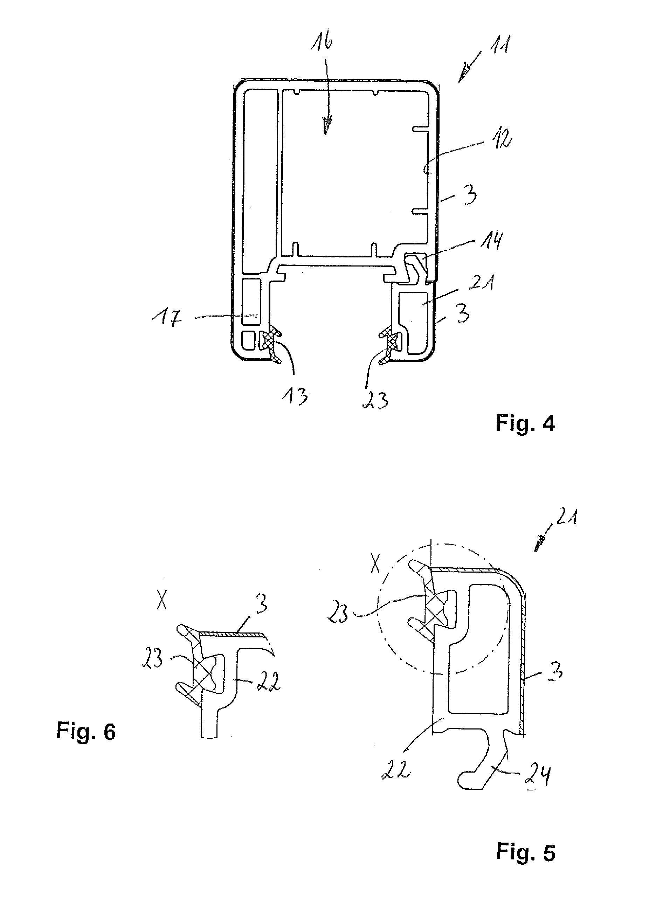

Es wird nunmehr Bezug genommen auf die Figuren 4 bis 6. In Figur 4 ist ein Gartenzaunelement 11 in Form eines Rahmens dargestellt, der wiederum aus einem Kunststoffgrundkörper 12 gebildet ist, der mit der WPC-Schicht 3 an der Außenseite beschichtet ist. Der Rahmen 11 weist einen quaderförmigen Basisabschnitt 16 und einen sich an einer Seite anschließenden, vorspringenden Halteabschnitt 17 auf, der zusammen mit einer, an der gegenüberliegenden Seite montierbaren Abschlussleiste, einer sogenannten Glasleiste 21, die ebenfalls ein Gartenzaunelement darstellt, einen Halteabschnitt beispielsweise für eine Paneele 1 gemäß Figur 1 bildet. Zum elastischen Halten ist am Halteabschnitt 17 eine Dichtlippe 13 und an der Glasleiste 21 eine Dichtlippe 23 vorgesehen. Zur Verbindung der Glasleiste 21 mit dem Rahmen 11 weist die Glasleiste einen hakenförmigen Vorsprung 24 auf, der in Eingriff in eine Nut 14 des Rahmens kommen kann und die Glasleiste 21 an den Rahmen 11 klemmen kann. Wie aus Figur 4 ersichtlich, sind die Außenseiten von Rahmen und Glasleiste komplett mit der WPC-Schicht 3 beschichtet.

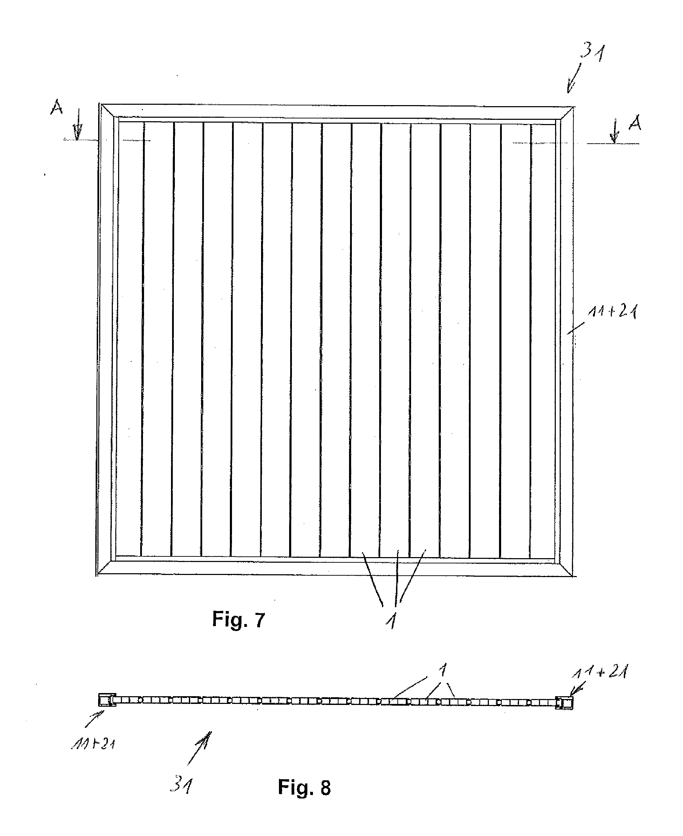

Es wird nunmehr Bezug genommen auf die Figuren 7 und 8, in denen ein Zaunflächenelement 31 als Gartenzaunelement in Seitenansicht gemäß Figur 7 und in Stirnansicht gemäß

Figur 8 dargestellt ist. Das Zaunflächenelement 31 setzt sich zusammen aus miteinander verbundenen Paneelen 1 und einem seitlichen Rahmen gebildet aus dem Rahmen 11 und der Glasleiste 21. Wie ersichtlich umschließt der Rahmen 11 mit Glasleiste 21 die Paneele 1 an allen vier Endbereichen.

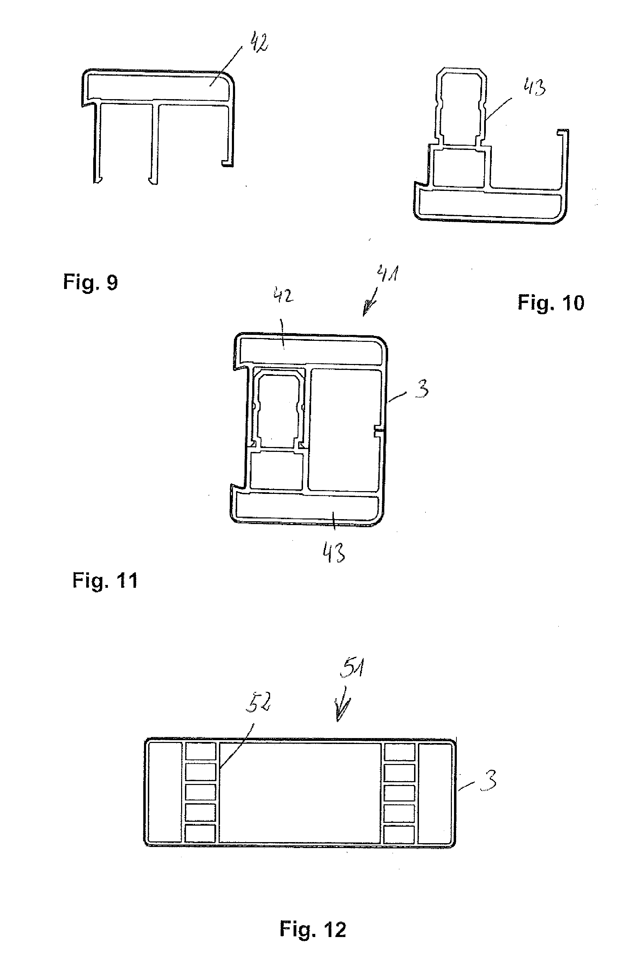

In den Figuren 9 bis 11 ist eine weitere Ausführungsform des erfindungsgemäßen Gartenzaunelements in Stirnansicht dargestellt. Figur 9 zeigt ein erstes Rahmenteilprofil 42 und Figur 10 zeigt ein zweites Rahmenteilprofil 43, welche zusammengesetzt das Rahmenprofil 41, dargestellt in Figur 11, bilden. Wie in Figur 11 ersichtlich umschließt die WPC-Schicht 3 die Außenseite des Rahmenprofils 41 vollständig.

In Figur 12 ist schematisch in Stirnansicht ein Zaunlattenprofil 51 dargestellt, mit einem Grundkörper 52, der wiederum vollständig von einer WPC-Schicht 3 umgeben ist.

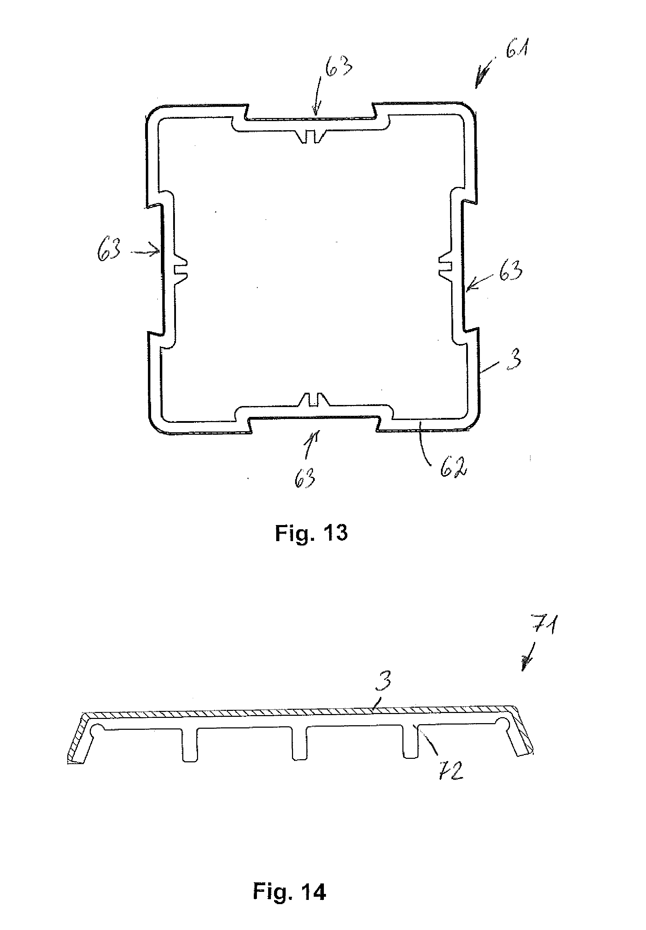

Eine weitere Ausführungsform des erfindungsgemäßen Gartenzaunelements zeigt die Figur 13, in der in Stirnansicht ein Zaunpfosten 61 dargestellt ist. Der Zaunpfosten 61 weist im Wesentlichen eine quadratische Form mit einem Grundkörper 62 auf, der wiederum von einer WPC-Schicht 3 umgeben ist. An den vier Seitenflächen sind schwalbenschwanzförmige Vertiefungen 63 vorgesehen, die zur Aufnahme von Stahlprofielen zum Einschrauben von Gartenzaunelenten dienen.

Figur 14 zeigt in Seitenansicht ein Füllprofil 71, das dazu dient, in nicht besetzte schwalbenschwanzförmige Vertiefungen 63 zur Bildung einer ebenen äußeren Seitenfläche eingesetzt zu werden. Auch dieses als Füllprofil ausgebildete Gartenzaunelement weist einen Grundkörper 72 auf, der mit einer WPC-Schicht 3 beschichtet ist.

Bezugnehmend auf Figur 15, ist dort eine ähnliche Ausführungsform eines Gartenzaunelements dargestellt, wie jenes von Figur 7. Das Zaunflächenelement 81 von Figur 15 weist ebenfalls Paneele und einen umlaufenden Rahmen 11 mit Glasleiste 21 auf. Im oberen Abschnitt ist jedoch ein Rankzaungeflecht 83 ausgebildet. Ein derartiges Rankzaungeflecht ist beispielsweise bei Holzmöbeln bekannt, die eine luftdurchlässige Seitenfläche haben sollen.

In Figur 16 ist ein Rankzaungeflechtprofil 86 dargestellt, das sowohl einen Grundkörper 87 als auch eine umlaufende WPC-Schicht 3 aufweist.

## Patentansprüche

1. Gartenzaunelement (1, 11, 21, 31, 41, 51, 61, 71, 81, 86) zur Bildung eines Gartenzauns bestehend aus einer Mehrzahl unterschiedlicher Zaunelemente, mit einem Grundkörper (2, 12, 22, 52, 62, 72), der aus einem Kunststoffmaterial, insbesondere PVC, mittels Extrusion gebildet ist, **dadurch gekennzeichnet, dass** der Grundkörper an den Sichtflächen mit einer mittels Coextrusion aufgebrachten dünnen WPC-Schicht (3) beschichtet ist.

2. Gartenzaunelement nach Anspruch 1, **dadurch gekennzeichnet, dass** die WPC-Schicht (3) eine Dicke von im Wesentlichen 0,3 bis 1 mm, bevorzugt 0,4 bis 0,5 mm aufweist.

3. Gartenzaunelement nach Anspruch 1 oder 2, **dadurch gekennzeichnet, dass** die Oberfläche der WPC-Beschichtung (3) Unregelmäßigkeiten aufweist, die haptisch erfassbar sind.

4. Gartenzaunelement nach einem der Ansprüche 1 bis 3, **dadurch gekennzeichnet, dass** als eines aus einer Mehrzahl verschiedener Elemente eines Gartenzauns ausgebildet sein kann, umfassend Paneele, Rahmen, Pfosten, Zaunlatten, Rahmenprofile, Rankzaunflechtelemente, Abschlussleisten, sog. "Glasleisten", Lisenen.

5. Gartenzaun gebildet aus einer Mehrzahl von Gartenzaunelementen nach einem der Ansprüche 1 bis 4.
